# EUROPEAN PATENT SPECIFICATION

(11) **EP 3 567 157 B1**
(45) Date of publication and mention of the grant of the patent: **05.07.2023**
(21) Application number: 18171872.7
(22) Date of filing: 11.05.2018
(51) Int. Cl.: D21B 1/02, B07B 9/00, D21B 1/30, D21B 1/32, B07B 1/20

(54) **PAPER WASTE PROCESSING**
PAPIERABFALLVERARBEITUNG
TRAITEMENT DE DÉCHETS DE PAPIER

(43) Date of publication of application: 13.11.2019
(73) Proprietor: New Wave by Innovations B.V., 6101XJ Echt (NL)
(72) Inventor: HENDERICKX, Mathias Wilhelmus Maria, 6065 EX MONTFORT (NL)
(74) Representative: Algemeen Octrooi- en Merkenbureau B.V.

(56) References cited:
- EP-A1- 0 801 168
- DE-A1- 3 343 788
- US-A- 3 890 220

## Description

### Technical field

The invention relates to a method of processing paper waste for obtaining paper fibers.

### Background of the invention

The process of waste paper recycling most generally involves mixing used paper with water and chemicals. It is chopped up and heated to break it down into tiny strands of cellulose, a type of organic plant material called fibers. The resulting mushy mixture is called pulp, or slurry. It is forced through screens containing holes and slots of various shapes and sizes, to remove small contaminants like globs of glue and small bits of plastic, especially from plastic-coated paper.

The pulp is further cleaned by spinning it around in large coneshaped cylinders. Heavy contaminants like staples, hard plastics, stones, metallic objects or other foreign objects are thrown to the outside of the cone and fall through the bottom of the cylinder. Lighter contaminants are collected in the centre of the cone and are removed.

Then the pulp is de-inked to remove printing ink and other sticky materials like glue residue and adhesives by injecting air and soap-like chemicals called surfactants into the pulp. The surfactants cause ink and sticky materials to loosen from the pulp and stick to the air bubbles, which can be removed as they float to the top of the mixture.

The resulting clean pulp can further be refined making them ideal for papermaking, color stripped to remove dyes from the paper and bleached to make it whiter and brighter.

The pulp is mixed with water and chemicals even more to a humidity of about 99 wt%. The watery pulp mixture is sprayed on a flat quickly moving wire screen. On the screen, water starts to drain from the pulp. More water is squeezed out and heated through a series of press rollers. Then it can be made into new recycled paper.

A disadvantage of the current process is that a lot of water and chemicals need to be added to the paper waste. The water needs to be removed from the pulp and chemicals, ink and sticky materials and other very small fibers which have washed out of the pulp during the deinking process, need to be removed from the water.

Another disadvantage is that in a typical paper mill plant, every 1000 kg of recovered paper will result in as much as 350 kg paper waste. Due to the fact that current paper recycling processes are not able to efficiently retrieve more useful materials currently all of this waste is being burned.

Patent applications US3890220 describes such a method and apparatus for separating wood pulp fibers from scrap products having the wood pulp fibers in fluff form. After cutting or chopping the scrap products into small pieces, a breaker operating in a upwardly directed air stream separates the fibers from sheet material. A travelling screen filters the individual fibers from the remaining waste.

Patent application DE3343788 also describes such a method and apparatus for separating fiber from non-fiber materials from products or mixtures of such materials by pulverizing the paper waste by rotating lugs and separate the fiber material from the remaining material by a sieve.

Furthermore it is from high importance that metal contaminants are removed thoroughly as they can cause sparks during the remainder of the recycling process. Preventing fire is an important issue in current paper mills.

Patent application EP0801168 describes a method and apparatus for recycling laminated film by shredding and subsequently separated by applying an impact frictional striking force to each of the shredded fragments. in the separated layers are subsequently subjected to a wind force classifying step and individually collected.

It is the object of the invention to provide an improved method of processing paper waste for obtaining paper fibers, from a stream of paper waste, by which at least some of the above mentioned disadvantages of known paper processing processes are obviated.

### Summary

In a first aspect, there is provided, a method of processing paper waste for obtaining paper fibers from a stream of paper waste, the method comprising the steps of:
- obtaining a pulverized portion of the stream of paper waste, the portion comprising the paper fibers and a further component, the portion having a humidity of at most 40 wt%;
- ripping apart the pulverized portion of paper waste by subjecting the portion in between at least two rotary cranks positioned adjacent to each other and arranged for counter-rotating in a mutual rotational plane;
- separating the ripped portion of paper waste into a stream of the paper fibers, and a stream of the further components by slinging the portion with the at least two rotary cranks against a sieve positioned in the circumference of the rotary cranks;
- separating the further components into a stream of components of low specific weight and a stream of components of high specific weight by dispersing the portion by thermal turbulence generated by the at least two rotary cranks.

The first step in the process of is obtaining a pulverized portion of said stream of paper waste. Where said paper waste comprises paper fibres and a further component. Said portion having a humidity of at most 40 wt%.

Said pulverized portion of paper waste is then subjected in between at least two rotary crank positioned adjacent to each other and arranged for counter-rotating in a mutual rotational plane with a frequency of preferably approximately 930 rpm. The rotary cranks pulverizes large components and friction created in between the rotary cranks rips apart various mutual attached components, such as plastic-coated paper for example from the food and drink packaging industry. Especially these paper and plastic components in plastic-coated papers are separated with this method, although the method is not limited to such use of separating plastic from paper (fibers) from paper waste, but is also applicable for other waste streams in which fibers of other kinds types are to be separated from a waste stream containing such fibers as well as a further component like plastic compounds.

Paper fibers are separated from the resulting mix of pulverized and ripped portion of paper waste by slinging said portion of paper waste with the rotary cranks against a wall of sieves positioned in the circumference of the rotary cranks. The circumference has a regular polygon shape containing sieves, preferably in the bottom part of the housing. Sieves have mesh diameter of preferably approximately 2 mm. Paper fibers are slung through the sieves and collected outside the housing.

Remaining portion is separated into a stream of materials of low specific weight and a stream of components of high specific weight, by dispersing said portion by thermal turbulence generated by the rotary cranks.

Components of height specific weight, typically comprising hard plastics (PVC), staples and other metal components can be collected at the bottom of the housing. Components of low specific weight, typically comprising plastic sheets such as polyethylene or polyethylene terephthalate, which can be collected at the top of the housing.

Current paper recycling not only use of huge amounts of water but also require where necessary additional recycling steps to increase the efficiency by lowering the amounts of remaining dump waste. Such additional steps are however often not profitable.

The invention was based on the insight that one of the challenges in this recycling process is the separation of paper fibers from plastic sheet material that often forms a large part of the paper waste material. Is was the insight of the inventor that two steps of recycling in particular archived results that where better than currently used wet recycling processes. First, the paper had to be mostly physically removed from its plastic sheet material, once separated, the difference in special weight between the paper (fibers) and the plastic sheets could be used to separate both in an air stream. Such a recycling process is not only able to efficiently retrieve paper fibers from the paper waste stream without the use of (large amounts of) water, but the remaining quantity of dump waste is also far lower when compared to conventional recycling processes.

In an example, the input stream of paper waste comprises the waste of a typical paper mill. Instead of being burned in large incinerators, the paper waste can be separated and recycled furthermore.

In an example, the input stream of paper waste contains plastic-coated paper, in particular containing a polyethylene compound, packaging materials (tetra pak). The plastic sheets can be separated from the paper fibers, while liquid residues are evaporated by the heat generated by the friction of the rotary cranks.

In an example, the method can be used for separating plastic fibers from a stream of plastic components and a further component, especially from used sanitary products.

The process is especially efficient in recovering paper fibers from a paper waste stream. The process is however not limited to such use. Also processing other waste streams such as used sanitary products such as tissues or other waste streams containing both fibers and plastics with a low specific weight can be subjected to the proposed method. In such an example, any waste stream containing fibers replaces the paper waste stream in order to obtain a stream of fibers and a stream of low specific weight plastics as well as a remaining stream of components of a high specific weight. As such, al examples of the description of the present invention are also applicable to such recovering processes of fibers from waste streams other then papers, e.g. from used sanitary products, or textile waste or synthetic fiber containing waste materials.

In an example, the sieves have a mesh diameter in the range of between 1 mm and 20 mm, preferably between approximately 2 mm and 12 mm, more preferably between approximately 2 mm and 6 mm, and most preferably approximately 2mm.

In an example, the rotary cranks have are positioned at a mutual distance in the range of between approximately 1 cm and 25 cm, preferably between approximately 2 cm and 20 cm, more preferably between approximately 3 cm and 15 cm, and most preferably between approximately 5 cm and 10 cm.

The rotary cranks preferably comprise a fixed crank element and disposable shredding tips or shredding knives. The shredding tips are preferably configurable in position on the crank such that the mutual distance between the free ends of the tips of both cranks can be set in the range between 1 cm and 10 cm, and preferably between 1 cm and 5 cm, whereas in the preferred configuration, the mutual distance is set at approximately 5 cm.

In an example, the rotary cranks have a rotary frequency of in the range of between approximately 100 rpm and 1500 rpm, preferably between approximately 400 rpm and 1200 rpm, more preferably between approximately 800 rpm and 1000 rpm, and most preferably approximately 900 rpm.

In an example, the method prior to the step of ripping further comprises the steps of:
- heating the paper waste to a temperature of at least approximately 65 °C.

In an example, the at least two rotary cranks are disposed in an at a least partly closed housing and generate the thermal turbulence in the housing resulting in an upward airstream for removing the components of low specific weight in an upper part of the housing.

In an example, the components of low specific weight are removed from the upper part of the housing by subjecting the components to a lower pressure air stream, in particular generated by a vacuum pump.

The rotation of the cranks generate an airflow. The generated heat by subjecting the paper waste portion to ripping apart in between the two cranks will add to the air stream by generating a thermal turbulence. In this upward air stream the low specific weight materials or components can be separated from the high specific weight materials. These low specific weight components will start to float in the air and arrive at the top of the housing in which the cranks are disposed. The top of the housing can contain an air vent or duct to remove these components. This can be achieved through an air pump which generates an air flow, or by a vacuum pump which will create a drop in air pressure and as a result will create an the air flow which will transport the components.

In an example, the humidity of at most 40 wt% is obtained by a step of adding water to the pulverized portion.

Several tests have pointed out that the best results are archived when the humidity of the paper portion is kept at a controlled constant rate which in particular is to be kept at around 40 wt%.

In a second aspect a paper processing apparatus is suggested for processing paper waste for obtaining paper fibers from a stream of paper waste, the apparatus comprising:
- a housing comprising a container for receiving at least a portion of the stream of paper waste in a pulverized form comprising the paper fibers and a further component, the portion having a humidity of at most 40 wt%, and wherein the container comprises at least two rotary cranks positioned in a lower part of the container adjacent to each other and arranged for counter-rotating in a mutual rotational plane, for ripping apart the pulverized portion of paper waste by subjecting the portion in between the at least two rotary cranks, the container further comprising a sieve positioned in the circumference of the rotary cranks, arranged for separating the ripped portion of paper waste into a stream of the paper fibers, by slinging the portion against the sieve, and wherein the rotary cranks generate thermal turbulence arranged for separating the further components into a stream of components of low specific weight and a stream of components of high specific weight;
- at least one motor for driving the at least two rotary cranks;
- a power supply for powering the at least one motor;
- a air pump for generating an air flow for removing the stream components of low specific weight from the container;
- a transportation unit for transporting the stream of the paper fibers from the apparatus;
- a waste removal unit for removing the stream of components of high specific weight from the apparatus.

In an example, the apparatus comprises two parallel containers each comprising the at least two rotary cranks, and at least one motor for each of the at least two rotary cranks.

In an example, the apparatus further comprising a conveyer belt positioned above both of the container, for transporting the portion of paper waste successively alternately between the two containers.

In an example, the transportation unit for transporting the stream of the paper fibers from the apparatus comprises a screw conveyor.

The above-mentioned and other features and advantages of the invention are illustrated in the following description with reference to the enclosed drawings which are provided by way of illustration only and which are not limitative to the present invention.

### Brief description of the drawings

Figure 1 shows, in top view, a typical embodiment in which the paper processing apparatus in accordance with the present disclosure is comprised two times.
Figure 2 shows, in side view, a typical embodiment in which the paper processing apparatus in accordance with the present disclosure is comprised two times.

### Detailed description of the drawings

In the description below with reference to the figures the invention is explained in view of recycling paper fibers from a stream of paper waste. It is emphasized that this is only one example of an applicable use of the method and corresponding apparatus. Other recycling processes in which waste stream containing fibers is to be processed in order to reclaim the fibers thereof may also be subject of the present disclosure.

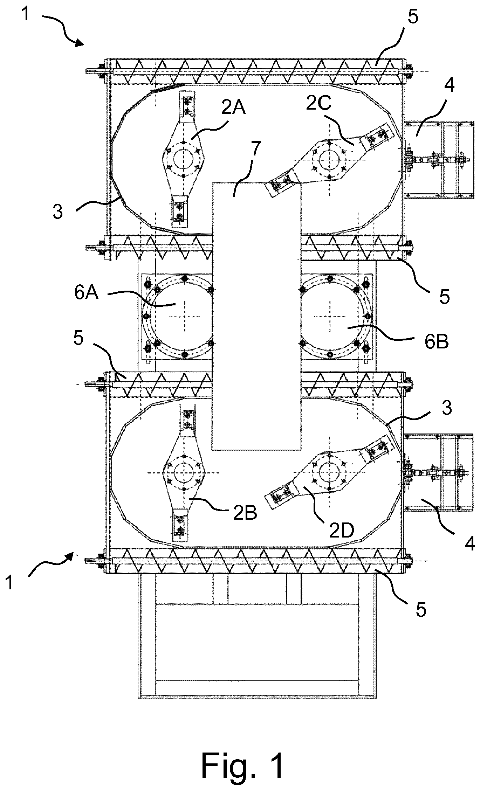

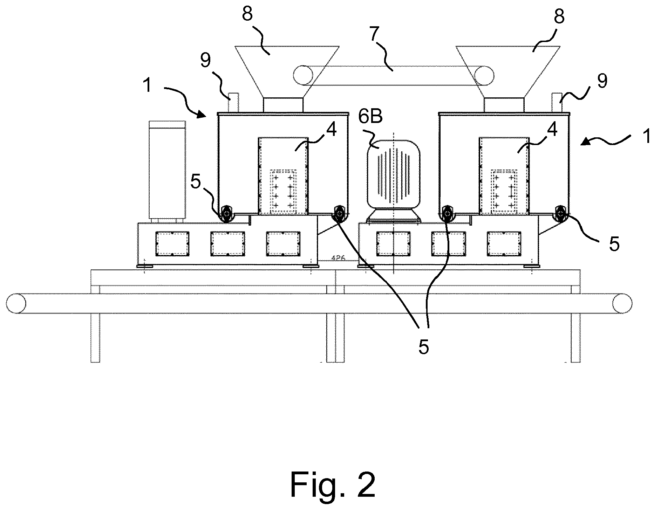

Figure 1 (top view) and figure 2 (side view) show a typical embodiment of the paper processing apparatus in accordance with the present disclosure. In this embodiment said paper processing apparatus 1 is comprised two times in parallel.

A pulverized portion of said stream of paper waste may be dumped on the conveyer belt 7 which transports the waste via gate 8 to container 3.

The pulverized portion has a, in comparison with known paper recycling processes, relative low humidity of approximately 40wt%. If the humidity of the paper waste is below this percentage, then water may be added to control and maintain the humidity at a constant level. In general, the paper waste will have an initial humidity of approximately 20 wt%. Whereas known recycling processes add significant amounts of water to obtain a wet sludge, the disclosed invention only adds little amounts of water to obtain a humidity of approximately 40wt%. If, for some reason, the initial humidity is above the 40wt%, then additional drying processes steps may be initiated. For example through heating, centrifuging, wringing or rolling.

Due to the fact that the shredding process in the container generates heat, the processing being of a dry-type with relatively low humidity levels, and the processed material being highly inflammable, the risk of fire is not negligible. To prevent fire, the apparatus is preferably equipped with a temperature sensor for monitoring the temperature in the container 3. If the temperature reaches a pre-determined threshold value, then an alarm signal may be generated which for example triggers a spray nozzle to add water to the container. The spray nozzle may also be used to maintain a constant humidity in the container of approximately 40wt%.

Said pulverized portion of paper waste is subjected between two rotary cranks (2A and 2C/2B and 2D), positioned in the bottom of container 3 adjacent to each other and arranged for counter-rotating in a mutual rotational plane. Said two rotary cranks are positioned at a mutual distance of approximately 5 cm. Distance between said rotary crank and the panels of container 3 is at preferably in the range of between 1 cm and 6 cm, more preferably between 2 cm and 4 cm and most preferably approximately 3 cm.

Preferably, the angular positions of the rotary cranks (2A and 2C and 2B and 2D) are aligned, such that the free ends or tips of the cranks are exactly opposite each other at a certain moment in time.

The counter-rotating rotary cranks or arms/blades (2A, 2B, 2C, 2D) pulverizes large components and friction created in between the rotary cranks rips apart various mutual attached components. The resulting mixture comprises separated components which can have different dimensions. In the situation that said portion of paper waste is subjected to the rotary cranks for a more extended period of time, the dimensions of the separated components will be smaller over time. Preferably the waste is subject to the rotating cranks for at least 1 minute and at most 10 minutes, more preferably between 2 and 8, even more preferably between 3 and 6 and most preferably approximately 6 minutes. In the event that the time duration is set at 1 minutes the processes is configured for a more or less continues flow of paper waste processing with preferably regular intervals in which the foreign materials with a high specific weight are removed from the container 3.

Once the portion has been subjected to the process or ripping it apart by the cranks, the components are separated but not yet sorted, which sorting is done by the subsequent step.

Paper fibers are separated or sorted from the resulting mix of pulverized and ripped portion of paper waste by slinging said portion of paper waste with the rotary cranks (2A, 2B, 2C, 2D) against sieves positioned in the panels of container 3, said container 3 having a regular polygon shape and positioned in the circumference of the rotary cranks (2A, 2B, 2C, 2D). Paper fibers are slung through the sieves and collecting outside container 3. Said stream of paper fibers is transported from said paper processing apparatus 1 using a screw conveyor 5.

The sieves may be uniform in mesh size of for example 2 mm but may also vary, e.g. from top to bottom of the container 3. The sieves may be disposed in a continuous manner or in a discrete manner in the circumference of the container 3. In a preferred embodiment, the sieves only located in the lower part of the container in a discrete manner.

Further components of said resulting mix of pulverized and ripped portion of paper waste remains in container 3 and are separated into a stream of components of low specific weight and into a stream of components of high specific weight, by dispersing said portion by thermal turbulence generated by the rotary cranks (2A, 2B, 2C, 2D). Said thermal turbulence generates an upward airstream in container 3 which can be enhanced by aid of an air flow generated by a fan.

The stream of components of low specific weight, e.g. the plastic from the plastic-coated paper, can be removed by an outlet 9 positioned in an upper part of container 3. Said stream of components of high specific weight can be removed by an outlet 4 positioned in a lower part of container 3.

In the embodiment, motor 6A is arranged for driving both rotary cranks 2A and 2B, while motor 6B is arranged for driving both rotary cranks 2C and 2D. Conveyer belt 7 is arranged for transporting said portion of paper waste successively between two containers 3 alternately. Container 3 of one paper processing apparatus 1 is filled for starting the paper waste process. At this moment the apparatus is demanding maximum power. When the paper waste process is almost ended, the apparatus is operating at minimum power, and container 3 of the other paper waste apparatus 1 is filled. With this method the power of the two motors 6A and 6B is utilized efficiently.

Based on the above description, a skilled person may provide modifications and additions to the method and arrangement disclosed.

## Claims

1. A method of processing paper waste for obtaining paper fibers from a stream of paper waste, said method comprising the steps of:
- obtaining a pulverized portion of said stream of paper waste, said portion comprising said paper fibers and a further component, said portion having a humidity of at most 40 wt%;
- ripping apart said pulverized portion of paper waste by subjecting said portion in between at least two rotary cranks (2A, 2B, 2C, 2D) positioned adjacent to each other and arranged for counter-rotating in a mutual rotational plane;
- separating said ripped portion of paper waste into a stream of said paper fibers, and a stream of said further components by slinging said portion with said at least two rotary cranks (2A, 2B, 2C, 2D) against a sieve positioned in the circumference of said rotary cranks;
- separating said further components into a stream of components of low specific weight and a stream of components of high specific weight by dispersing said portion by thermal turbulence generated by said at least two rotary cranks (2A, 2B, 2C, 2D).

2. The method of processing paper waste according to claim 1, wherein said paper waste comprises plastic-coated paper and said components of low specific weight comprise a polyethylene compound.

3. The method of processing paper waste according to claim 1 or 2, wherein said sieves have a mesh diameter in the range of between approximately 1 mm and 20 mm, preferably between approximately 2 mm and 12 mm, more preferably between approximately 2 mm and 6 mm, and most preferably approximately 2mm.

4. The method of processing paper waste according to any of the previous claims, wherein said rotary cranks (2A, 2B, 2C, 2D) are positioned at a mutual distance in the range of between approximately 1 cm and 25 cm, preferably between approximately 2 cm and 20 cm, more preferably between approximately 3 cm and 15 cm, and most preferably between approximately 5 cm and 10 cm.

5. The method of processing paper waste according to any of the previous claims, wherein said rotary cranks (2A, 2B, 2C, 2D) have a rotary frequency of in the range of between approximately 100 rpm and 1500 rpm, preferably between approximately 400 rpm and 1200 rpm, more preferably between approximately 800 rpm and 1000 rpm, and most preferably approximately 900 rpm.

6. The method of processing paper waste according to any of the previous claims, wherein said method prior to said step of ripping further comprises the steps of:
- heating said paper waste to a temperature of at least approximately 65 °C.

7. The method of processing paper waste according to any of the previous claims, wherein said at least two rotary cranks (2A, 2B, 2C, 2D) are disposed in an at least partly closed housing and generate said thermal turbulence in said housing resulting in an upward airstream for removing said components of low specific weight in an upper part of said housing.

8. The method of processing paper waste according to claim 6, wherein said components of low specific weight are removed from said upper part of said housing by subjecting said components to a lower pressure air stream, in particular generated by a vacuum pump.

9. The method of processing paper waste according to any of the previous claims, wherein said humidity of at most 40 wt% is obtained by a step of adding water to said pulverized portion.

10. A paper processing apparatus (1) for processing paper waste for obtaining paper fibers from a stream of paper waste, said apparatus (1) comprising:
- a housing comprising a container (3) for receiving at least a portion of said stream of paper waste in a pulverized form comprising said paper fibers and a further component, said portion having a humidity of at most 40 wt%, and wherein said container (3) comprises at least two rotary cranks (2A, 2B, 2C, 2D) positioned in a lower part of said container (3);
- at least one motor (6A, 6B) for driving said at least two rotary cranks (2A, 2B, 2C, 2D);
- a power supply for powering said at least one motor;
- an air pump for generating an air flow for removing said stream components of low specific weight from said container (3);
- a transportation unit (5) for transporting said stream of said paper fibers from said apparatus (1);
- a waste removal unit (4) for removing said stream of components of high specific weight from said apparatus (1);
**characterized in that** said at least two rotary cranks (2A, 2B, 2C, 2D) are positioned adjacent to each other and arranged for counter-rotating in a mutual rotational plane, for ripping apart said pulverized portion of paper waste by subjecting said portion in between said at least two rotary cranks (2A, 2B, 2C, 2D), said container (3) further comprising a sieve positioned in the circumference of said rotary cranks (2A, 2B, 2C, 2D), arranged for separating said ripped portion of paper waste into a stream of said paper fibers, by slinging said portion against said sieve, and wherein said rotary cranks (2A, 2B, 2C, 2D) generate thermal turbulence arranged for separating said further components into a stream of components of low specific weight and a stream of components of high specific weight.

11. The paper processing apparatus (1) according to claim 10, wherein said apparatus (1) comprises two parallel containers (3) each comprising said at least two rotary cranks (2A, 2B, 2C, 2D), and at least one motor (6A, 6B) for each of said at least two rotary cranks (2A, 2B, 2C, 2D).

12. The paper processing apparatus (1) according to claim 11, said apparatus (1) further comprising a conveyer belt (7) positioned above both of said containers (3), for transporting said portion of paper waste successively alternately between said two containers (3).

13. The paper processing apparatus (1) according to claim 10, 11 or 12, wherein said transportation unit (5) for transporting said stream of said paper fibers from said apparatus (1) comprises a screw conveyor.

## Patentansprüche

1. Verfahren zum Verarbeiten von Papierabfall zum Erhalten von Papierfasern aus einem Strom von Papierabfall, wobei das Verfahren die folgenden Schritte umfasst:
Erhalten eines pulverisierten Teils des Stroms von Papierabfall, wobei der Teil die Papierfasern und eine weitere Komponente umfasst, wobei der Teil eine Feuchtigkeit von höchstens 40 Gew.-% aufweist;
Zertrennen des pulverisierten Teils des Papierabfalls durch Aussetzen des Teils zwischen mindestens zwei Drehkurbeln (2A, 2B, 2C, 2D), die angrenzend aneinander positioniert und dazu angeordnet sind, sich in einer gemeinsamen Drehebene gegenläufig zu drehen;
Teilen des zertrennten Teils des Papierabfalls in einen Strom der Papierfasern und einen Strom der weiteren Komponenten durch Schleudern des Teils mit den mindestens zwei Drehkurbeln (2A, 2B, 2C, 2D) gegen ein Sieb, das am Umfang der Drehkurbeln positioniert ist;
Teilen der weiteren Komponenten in einen Strom von Komponenten mit niedrigem spezifischem Gewicht und einen Strom von Komponenten mit hohem spezifischem Gewicht durch Dispergieren des Teils durch thermische Verwirbelung, die durch die mindestens zwei Drehkurbeln (2A, 2B, 2C, 2D) erzeugt wird.

2. Verfahren zum Verarbeiten von Papierabfall nach Anspruch 1, wobei der Papierabfall kunststoffbeschichtetes Papier umfasst und die Komponenten mit niedrigem spezifischem Gewicht eine Polyethylenverbindung umfassen.

3. Verfahren zum Verarbeiten von Papierabfall nach Anspruch 1 oder 2, wobei die Siebe einen Maschendurchmesser im Bereich von zwischen ca. 1 mm und 20 mm, vorzugsweise zwischen ca. 2 mm und 12 mm, stärker bevorzugt zwischen ca. 2 mm und 6 mm, und am stärksten bevorzugt ca. 2 mm, aufweisen.

4. Verfahren zum Verarbeiten von Papierabfall nach einem der vorhergehenden Ansprüche, wobei die Drehkurbeln (2A, 2B, 2C, 2D) in einem gegenseitigen Abstand im Bereich von zwischen ca. 1 cm und 25 cm, vorzugsweise zwischen ca. 2 cm und 20 cm, stärker bevorzugt zwischen ca. 3 cm und 15 cm, und am stärksten bevorzugt zwischen ca. 5 cm und 10 cm, angeordnet sind.

5. Verfahren zum Verarbeiten von Papierabfall nach einem der vorhergehenden Ansprüche, wobei die Drehkurbeln (2A, 2B, 2C, 2D) eine Drehfrequenz von im Bereich von zwischen ca. 100 U/min und 1500 U/min, vorzugsweise zwischen ca. 400 U/min und 1200 U/min, stärker bevorzugt zwischen ca. 800 U/min und 1000 U/min, und am stärksten bevorzugt ca. 900 U/min, aufweisen.

6. Verfahren zum Verarbeiten von Papierabfall nach einem der vorhergehenden Ansprüche, wobei das Verfahren vor dem Schritt des Zertrennens ferner die folgenden Schritte umfasst:
Erwärmen des Papierabfalls auf eine Temperatur von mindestens ca. 65 °C.

7. Verfahren zum Verarbeiten von Papierabfall nach einem der vorangehenden Ansprüche, wobei die mindestens zwei Drehkurbeln (2A, 2B, 2C, 2D) in einem zumindest teilweise geschlossenen Gehäuse angeordnet sind und die thermische Verwirbelung in dem Gehäuse erzeugen, was in einem nach oben gerichteten Luftstrom zum Entfernen der Komponenten mit niedrigem spezifischem Gewicht in einem oberen Teil des Gehäuses resultiert.

8. Verfahren zum Verarbeiten von Papierabfall nach Anspruch 6, wobei die Komponenten mit niedrigem spezifischem Gewicht aus dem oberen Teil des Gehäuses entfernt werden, indem die Komponenten einem Luftstrom mit niedrigerem Druck ausgesetzt werden, der insbesondere durch eine Vakuumpumpe erzeugt wird.

9. Verfahren zum Verarbeiten von Papierabfall nach einem der vorangehenden Ansprüche, wobei die Feuchtigkeit von höchstens 40 Gew.-% durch einen Schritt zum Hinzufügen von Wasser zu dem pulverisierten Teil erhalten wird.

10. Papierverarbeitungseinrichtung (1) zum Verarbeiten von Papierabfall zum Erhalten von Papierfasern aus einem Strom von Papierabfall, wobei die Einrichtung (1) Folgendes umfasst:
ein Gehäuse, das einen Behälter (3) zum Aufnehmen zumindest eines Teils des Stroms von Papierabfall in einer pulverisierten Form umfasst, der die Papierfasern und eine weitere Komponente umfasst, wobei der Teil eine Feuchtigkeit von höchstens 40 Gew.-% aufweist, und wobei der Behälter (3) mindestens zwei Drehkurbeln (2A, 2B, 2C, 2D) umfasst, die in einem unteren Teil des Behälters (3) positioniert sind;
mindestens einen Motor (6A, 6B) zum Antreiben der mindestens zwei Drehkurbeln (2A, 2B, 2C, 2D);
eine Leistungsversorgung zum Versorgen des mindestens einen Motors mit Leistung;
eine Luftpumpe zum Erzeugen eines Luftstroms zum Entfernen des Stroms von Komponenten mit niedrigem spezifischem Gewicht aus dem Behälter (3);
eine Transporteinheit (5) zum Transportieren des Stroms der Papierfasern aus der Einrichtung (1);
eine Abfallentfernungseinheit (4) zum Entfernen des Stroms von Komponenten mit hohem spezifischem Gewicht aus der Einrichtung (1);
**dadurch gekennzeichnet, dass** die mindestens zwei Drehkurbeln (2A, 2B, 2C, 2D) angrenzend aneinander positioniert und dazu angeordnet sind, sich in einer gemeinsamen Drehebene zum Zertrennen des pulverisierten Teils des Papierabfalls durch Aussetzen des Teils zwischen den mindestens zwei Drehkurbeln (2A, 2B, 2C, 2D) gegenläufig zu drehen, wobei der Behälter (3) ferner ein Sieb umfasst, das am Umfang der Drehkurbeln (2A, 2B, 2C, 2D) positioniert ist, das zum Teilen des zertrennten Teils des Papierabfalls in einen Strom der Papierfasern durch Schleudern des Teils gegen das Sieb angeordnet ist, und wobei die Drehkurbeln (2A, 2B, 2C, 2D) eine thermische Verwirbelung erzeugen, die zum Teilen der weiteren Komponenten in einen Strom von Komponenten mit niedrigem spezifischem Gewicht und einen Strom von Komponenten mit hohem spezifischem Gewicht angeordnet ist.

11. Papierverarbeitungseinrichtung (1) nach Anspruch 10, wobei die Einrichtung (1) zwei parallele Behälter (3), die jeweils die mindestens zwei Drehkurbeln (2A, 2B, 2C, 2D) umfassen, und mindestens einen Motor (6A, 6B) für jede der mindestens zwei Drehkurbeln (2A, 2B, 2C, 2D) umfasst.

12. Papierverarbeitungseinrichtung (1) nach Anspruch 11, wobei die Einrichtung (1) ferner ein Förderband (7) umfasst, das über den beiden Behältern (3) zum Transportieren des Teils von Papierabfall sukzessive abwechselnd zwischen den zwei Behältern (3) positioniert ist.

13. Papierverarbeitungseinrichtung (1) nach Anspruch 10, 11 oder 12, wobei die Transporteinheit (5) zum Transportieren des Stroms der Papierfasern von der Einrichtung (1) einen Schneckenförderer umfasst.

## Revendications

1. Procédé de traitement de déchets de papier pour obtenir des fibres de papier à partir d'un flux de déchets de papier, ledit procédé comprenant les étapes de :
- obtention d'une partie pulvérisée dudit flux de déchets de papier, ladite partie comprenant lesdites fibres de papier et un composant supplémentaire, ladite partie ayant une humidité d'au plus 40% en poids ;
- déchirement de ladite partie pulvérisée de déchets de papier en exposant ladite partie entre au moins deux manivelles rotatives (2A, 2B, 2C, 2D) positionnées de manière adjacente l'une à l'autre et agencées pour tourner en sens inverse dans un plan de rotation mutuel ;
- séparation de ladite partie déchirée de déchets de papier en un flux desdites fibres de papier, et un flux desdits composants supplémentaires en projetant ladite partie avec lesdites au moins deux manivelles rotatives (2A, 2B, 2C, 2D) contre un tamis positionné dans la circonférence desdites manivelles rotatives ;
- séparation desdits composants supplémentaires en un flux de composants de faible poids spécifique et un flux de composants de poids spécifique élevé en dispersant ladite partie par turbulence thermique générée par lesdites au moins deux manivelles rotatives (2A, 2B, 2C, 2D).

2. Procédé de traitement de déchets de papier selon la revendication 1, dans lequel lesdits déchets de papier comprennent du papier plastifié et lesdits composants de faible poids spécifique comprennent un composé de polyéthylène.

3. Procédé de traitement de déchets de papier selon la revendication 1 ou 2, dans lequel lesdits tamis ont un diamètre de maille se trouvant dans la plage comprise entre environ 1 mm et 20 mm, de préférence entre environ 2 mm et 12 mm, plus préférablement entre environ 2 mm et 6 mm, et le plus préférablement d'environ 2 mm.

4. Procédé de traitement de déchets de papier selon l'une des revendications précédentes, dans lequel lesdites manivelles rotatives (2A, 2B, 2C, 2D) sont positionnées à une distance mutuelle se trouvant dans la plage comprise entre environ 1 cm et 25 cm, de préférence entre environ 2 cm et 20 cm, plus préférablement entre environ 3 cm et 15 cm, et le plus préférablement entre environ 5 cm et 10 cm.

5. Procédé de traitement de déchets de papier selon l'une des revendications précédentes, dans lequel lesdites manivelles rotatives (2A, 2B, 2C, 2D) ont une fréquence de rotation se trouvant dans la plage comprise entre environ 100 tr/min et 1500 tr/min, de préférence entre environ 400 tr/min et 1200 tr/min, plus préférablement entre environ 800 tr/min et 1000 tr/min, et le plus préférablement d'environ 900 tr/min.

6. Procédé de traitement de déchets de papier selon l'une des revendications précédentes, dans lequel ledit procédé avant ladite étape de déchirement comprend en outre l'étape de :
- chauffage desdits déchets de papier à une température d'au moins environ 65°C.

7. Procédé de traitement de déchets de papier selon l'une des revendications précédentes, dans lequel lesdites au moins deux manivelles rotatives (2A, 2B, 2C, 2D) sont disposées dans un logement au moins partiellement fermé et génèrent ladite turbulence thermique dans ledit logement entraînant un courant d'air ascendant pour éliminer lesdits composants de faible poids spécifique dans une partie supérieure dudit logement.

8. Procédé de traitement de déchets de papier selon la revendication 6, dans lequel lesdits composants de faible poids spécifique sont éliminés de ladite partie supérieure dudit logement en soumettant lesdits composants à un courant d'air à plus faible pression, en particulier généré par une pompe à vide.

9. Procédé de traitement de déchets de papier selon l'une des revendications précédentes, dans lequel ladite humidité d'au plus 40% en poids est obtenue par une étape d'ajout d'eau à ladite partie pulvérisée.

10. Appareil de traitement de papier (1) pour traiter des déchets de papier afin d'obtenir des fibres de papier à partir d'un flux de déchets de papier, ledit appareil (1) comprenant :
- un logement comprenant un récipient (3) pour recevoir au moins une partie dudit flux de déchets de papier sous une forme pulvérisée comprenant lesdites fibres de papier et un composant supplémentaire, ladite partie ayant une humidité d'au plus 40% en poids, et dans lequel ledit récipient (3) comprend au moins deux manivelles rotatives (2A, 2B, 2C, 2D) positionnées dans une partie inférieure dudit récipient (3) ;
- au moins un moteur (6A, 6B) pour entraîner lesdites au moins deux manivelles rotatives (2A, 2B, 2C, 2D) ;
- une alimentation électrique pour alimenter ledit au moins un moteur ;
- une pompe à air pour générer un écoulement d'air pour éliminer lesdits composants de flux de faible poids spécifique dudit récipient (3) ;
- une unité de transport (5) pour transporter ledit flux desdites fibres de papier depuis ledit appareil (1) ;
- une unité d'élimination de déchets (4) pour éliminer ledit flux de composants de poids spécifique élevé dudit appareil (1) ;
**caractérisé en ce que** lesdites au moins deux manivelles rotatives (2A, 2B, 2C, 2D) sont positionnées de manière adjacente l'une à l'autre et agencées pour tourner en sens inverse dans un plan de rotation mutuel, pour déchirer ladite partie pulvérisée de déchets de papier en exposant ladite partie entre lesdites au moins deux manivelles rotatives (2A, 2B, 2C, 2D), ledit récipient (3) comprenant en outre un tamis positionné dans la circonférence desdites manivelles rotatives (2A, 2B, 2C, 2D), agencé pour séparer ladite partie déchirée de déchets de papier en un flux desdites fibres de papier, en projetant ladite partie contre ledit tamis, et dans lequel lesdites manivelles rotatives (2A, 2B, 2C, 2D) génèrent une turbulence thermique agencée pour séparer lesdits composants supplémentaires en un flux de composants de faible poids spécifique et un flux de composants de poids spécifique élevé.

11. Appareil de traitement de papier (1) selon la revendication 10, dans lequel ledit appareil (1) comprend deux récipients parallèles (3) comprenant chacun lesdites au moins deux manivelles rotatives (2A, 2B, 2C, 2D), et au moins un moteur (6A, 6B) pour chacune desdites au moins deux manivelles rotatives (2A, 2B, 2C, 2D).

12. Appareil de traitement de papier (1) selon la revendication 11, ledit appareil (1) comprenant en outre un tapis roulant (7) positionné au-dessus desdits deux récipients (3), pour transporter ladite partie de déchets de papier successivement de manière alternée entre lesdits deux récipients (3).

13. Appareil de traitement de papier (1) selon la revendication 10, 11 ou 12, dans lequel ladite unité de transport (5) destinée à transporter ledit flux desdites fibres de papier depuis ledit appareil (1) comprend un convoyeur à vis.
